# EUROPEAN PATENT APPLICATION

(11) **EP 0 903 545 A2**
(43) Date of publication of application: **24.03.1999**
(21) Application number: 98204140.2
(22) Date of filing: 08.08.1994
(51) Int. Cl.: F24F 3/06

(54) **Heating, cooling and ventilating system, and room atmosphere conditioning unit for such a system**

(62) Divisional of application: 94927856.8
(71) Applicant: Van Holsteijn & Kemna Special Products B.V., 2611 XH Delft (NL)
(72) Inventor: Kemna, René Bertinus Joannes, 2628 BM Delft (NL); Van Holsteijn, Robertus Cornelis Adrianus, 2636 HS Schipluiden (NL)
(74) Representative: Mertens, Hans Victor

(57) **Abstract**

A line for a room atmosphere condition system comprises at least two fluid ducts integrated in the line. The line may further comprise at least one lead integrated in the line. One of the fluid ducts may be an air duct for sampling air from a room. The fluid ducts may comprise a feed duct for feeding a heating fluid or a cooling fluid, and a return duct for the heating fluid or cooling fluid.

## Description

The present invention relates to a system for conditioning the atmosphere in at least two separate rooms of a building, the system comprising heat generating means, cold generating means, or a combination thereof, and ventilating means, the heat generating means being situated centrally inside or outside the building and being adapted for supplying heat to a heating fluid, the cold generating means being situated centrally inside or outside the building and being adapted for supplying cold to a cooling fluid, the ventilating means being adapted for ventilating the rooms, the system further comprising: first heat exchanging means located in each room; and a fluid pipe system for distributing the heating fluid or the cooling fluid from the heat generating means or the cold generating means, respectively, to the first heat exchanging means. The rooms in which the heat exchanging means of the system according to the invention are situated can be in one and the same building or in different buildings.

In the past, a great variety of systems has been proposed and used for heating, cooling and/or ventilating a space such that agreeable living or working conditions prevail in the space which can be for example a room in a house, apartment or office.

A conventional, simple and very common system is a central heating system comprising a centrally installed burner/heat-exchanger unit for heating water that is pumped in a loop pipe system to various radiators. Each of the radiators is provided with a manually operated valve or a thermostatically operated valve allowing hot water in each radiator or blocking the flow of water to the radiator. Usually only in the main living room the temperature is sensed for the control of the operation of the burner/heat-exchanger unit and the pump. As a consequence, the temperature in the main living room is controlled best, whereas the control of the temperature in the other room leaves a lot to be desired.

Hitherto, the ventilation of rooms has been mainly natural or mechanical, local (i.e. for one room or for a small number of rooms) or central. In a central ventilation system, a duct system is used leading to at least the most frequently used rooms for mechanically removing air from these rooms and out of the house. The air removed is replaced by air drawn in from outside the house or from other rooms. In a further development, the air is drawn into the house, fed into one or more rooms and in a balanced way removed out of the house via other rooms, regaining the heat that has been supplied to the air before distributing it in the house, or the heat that has accumulated in the air in its passage through the house.

A disadvantage of the known centrally controlled systems is that they do not provide for a setting of heating, cooling or ventilation locally depending on the desired temperature and quality of atmosphere in each room, which may be different for each room depending on its use.

The object of the system according to the invention is to provide a heating, cooling and ventilating system which provides an improved individual conditioning of the atmosphere in each room in a simple arrangement which can be easily built into existing and new buildings.

Another object of the invention is to reduce ventilation losses.

These and other objects are attained with the system according to the invention, which is characterized in that each room is provided with a separate ventilating unit and second heat exchanging means, the ventilating unit containing at least one fan for drawing in air directly from outside the building through an inlet duct and through the second heat exchanging means into the room, and blowing air out of the room through the second heat exchanging means and through an outlet duct. With the arrangement according to the invention each separate room is mechanically ventilated in a balanced way independent from the ventilation of other rooms, whereas the heat in the ventilating air is recovered. Fresh outside air is used for ventilating each room. The temperature in each room is controlled by the first heat exchanging means providing an indirect radiator or convector type heating.

In a preferred embodiment the system according to the invention comprises means for measuring the quality of the air in each room and operating the fan or fans of the ventilating unit in a room when the air quality in the room is below a predetermined level. Accordingly, a ventilating unit operates to maintain a predetermined air quality in the corresponding room, and uses no energy when the air quality is sufficiently high. Air quality may e.g. refer to the concentration of a particular gas in the air, such as oxygen or carbon dioxide, or to the concentration and/or size of dust particles in the air, all of which factors can be measured and used for operating the fan or fans. A ventilating unit may comprise means for filtering and/or humidifying the air.

Preferably the first heat exchanging means are integrated with the second heat exchanging means and the ventilating unit to form a room atmosphere conditioning unit, to make the room atmosphere conditioning unit compact and to reduce its costs.

In a preferred embodiment the room atmosphere conditioning unit comprises a sandwiched structure of the first heat exchanging means, a layer of insulating material, and the second heat exchanging means, the first and the second heat exchanging means extending generally vertically, which provides for a relatively thin unit having large heat exchanging areas, so that a high efficiency can be reached, whereas the required space is small. This embodiment of the room atmosphere conditioning unit can be built in a recess of a wall of the room, if desired.

In another preferred embodiment the room atmosphere conditioning unit comprises a stacked structure, the second heat exchanging means being placed above the first heat exchanging means. As a result of this combination of the first heat exchanging means with the second heat exchanging means no further provision need be made for heating cold ventilating air.

In a further preferred embodiment the air inlet duct and the air outlet duct consist of a narrow slit having a width which is generally equal to the width of the room atmosphere conditioning unit. With this measure the renewal of the air in the room is improved when compared to known ventilating systems bringing air into or out of a room at one point.

To save energy, the room atmosphere conditioning unit is adapted to remove air from the room near the bottom side of the unit.

Taking into account the high price of a device for measuring the quality of air, preferably the system according to the invention contains a central ventilation control unit comprising a gas analysis unit which is connected to an air duct system leading from each room to the gas analysis unit, the central ventilation control unit further comprising means for selectively sampling the air in each room through the air duct system and selectively controlling the fan in each room in response thereto. In this way, only one gas analysis unit is used for measuring the air quality in each room of the building, reducing the costs of the system.

In a preferred embodiment the ventilating units are powered by an electric power supply through electrical leads from the central ventilation control unit, the power supply comprising an AC-DC converter for converting the mains high voltage AC electric power into low voltage DC electric power for the ventilating units. Supplying the ventilating units with DC electric power facilitates the use of low cost DC fans which have a higher efficiency than high voltage AC fans. Supplying the ventilating units with low voltage DC electric power from the central ventilation control means obviates the use of a transformer in the ventilating units, which leads to a substantial reduction of the cost of such a unit. Finally it is to be remarked that the rotational speed of DC fans can be easily controlled, if desired.

The system according to the invention preferably has a central heating/cooling control unit which contains control valves for regulating the flow of heating or cooling fluid to the first heat exchanging means in each room, the fluid pipe system providing direct connections between a control valve and the corresponding first heat exchanging means in a room.
The first heat exchanging means, e.g. a radiator or a convector, in the system according to the invention thus are not provided with a manually operated valve or a thermostatically operated valve; any valve for regulating the flow of the heating fluid or cooling fluid is contained in the central heating/cooling control unit, from which feed and return pipes directly lead to every heat exchanging means. In this way the heating or cooling of each separate room is controlled individually by the central heating/cooling control unit for an optimum conditioning of the atmosphere in each room.

In a preferred embodiment the system comprises temperature sensor means located in each room for generating data signals representing the temperature in the room, the data signals being fed to the central heating/cooling control unit for comparison with set values and controlling the heat/cold generating means and the control valves for reaching the set values in each room.

In a system with a central ventilation control unit the air duct and the electrical leads for each ventilating unit are preferably integrated in a single line or cable running from the room to the central ventilation control unit.

In a system comprising a central ventilation control unit and a central heating/cooling control unit the air duct and the fluid pipes for each first heat exchanging means preferably are integrated in a single line or cable running from the room to the central ventilation and heating/cooling control unit. Alternatively, the air duct, the electrical leads for each ventilating unit, the fluid pipes for each first heat exchanging means, and data signal lines may be integrated in a single line or cable running from the room to the central ventilation and heating/cooling control unit.

The above-described line or cable can be made round or flat or having any other suitable cross-section.

An advantegeous embodiment of the system according to the invention comprises a heating device having a torus-shaped hot water boiler, inside which torus a helically shaped tube is placed containing a burner at one end, the other end of the tube being the exhaust for the flue gases. Such a heating device, which can also be used as such in other heating applications, can be made very compact. Preferably the helically shaped tube is contained in a second helically shaped tube inside the torus, the space between the outer wall of the first helically shaped tube and the inner wall of the second helically shaped tube being adapted to heat a central heating fluid.

In the following the invention is explained in further detail with reference to the accompanying drawing, in which:
Fig. 1 shows a first embodiment of a room atmosphere conditioning unit according to the invention;
Fig. 2 shows a second embodiment of a room atmosphere conditioning unit according to the invention;
Fig. 3 shows a third embodiment of a room atmosphere conditioning unit according to the invention;
Fig. 4 schematically shows a building with two separate rooms, the building being provided with a heating or cooling and ventilating system according to the invention;
Fig. 5 shows a diagram of a central heating system according to the invention;
Fig. 6 shows a diagram of a combined central heating and domestic water heating system according to the invention;
Fig. 7 shows a diagram of another embodiment of a central heating and domestic water heating system according to the invention;
Fig. 8 shows a diagram of a central heating/cooling and domestic water heating and ventilating system according to the invention;
Fig. 9 shows an alternative embodiment of the system of Fig. 8;
Fig. 10 shows a cross-section of an integrated line for use in the system of Fig. 5;
Fig. 11 shows a cross-section of an integrated line for use in the system of Figs. 8 and 9; and
Fig. 12 shows a cross-section of an integrated line for use in the system of Figs. 8 and 9;
Fig. 13 schematically shows a side view of a central heating and domestic water heating device according to the invention;
Fig. 14 shows a front view of the device of Fig. 13;
Fig. 15 shows a left side view of an embodiment of the device of Figs. 13 and 14;
Fig. 16, 17 and 18 show a front, right side and top cross-sectional view, respectively, of the device of Fig. 15; and
Fig. 19 illustrates the placing and space requirements of the device of Figs. 15-18.

In the different figures, similar parts or parts having a similar function are designated by the same reference symbols.

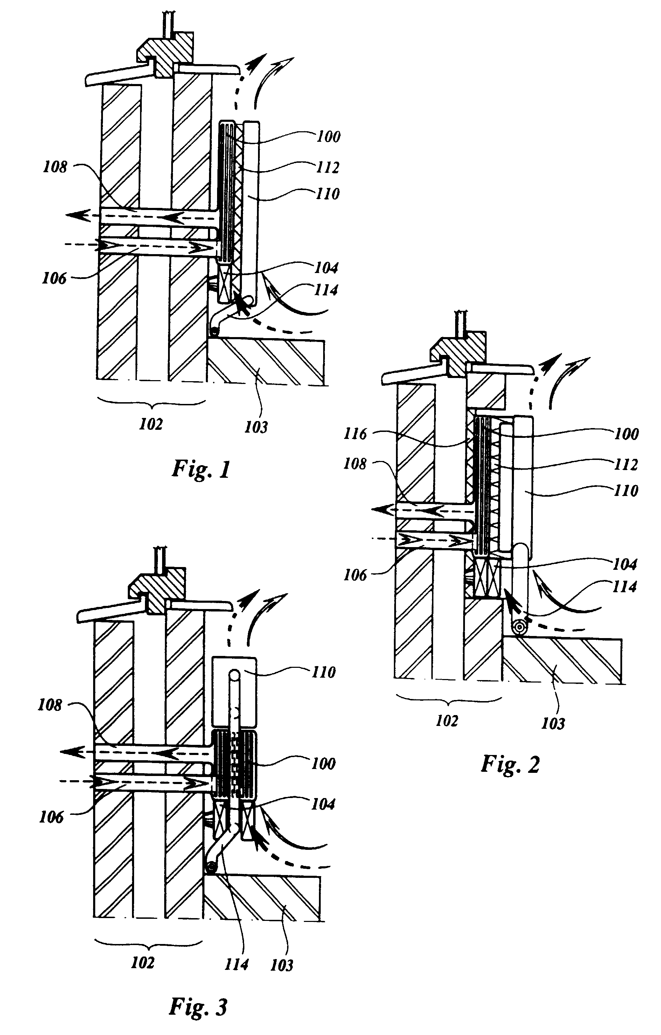

Fig. 1 shows a plate-type air/air heat exchanger 100 arranged in a room of a building against a hollow wall 102 near the floor 103. One or more fans 104 are arranged for drawing air from outside the building through an inlet duct 106 in the hollow wall 102, and for blowing the air into the room through the heat exchanger 100. On the other hand, the fans 104 are arranged for drawing air from the room through the heat exchanger 100 and through an outlet duct 108 out of the building. In this way, whenever necessary a balanced mechanical ventilation with heat recovery is provided for. The heat exchanger 100 is combined with a fluid/air heat exchanger 110, which is separated from the heat exchanger 100 by a layer of insulating material 112. The heat exchanger 110 has a heating or cooling fluid inlet and outlet 114. The combination of the heat exchanger 100 and the heat exchanger 110 provides a room atmosphere conditioning unit which can both control the temperature and the air quality in the room.

Fig. 2 shows a similar arrangement as fig. 1, the room atmosphere conditioning unit being partly built in a recess in the hollow wall 102 and being backed by insulating material 116.

In the arrangement of Fig. 3, a fluid/air heat exchanger 110 is situated above an air/air heat exchanger 100 providing a different type of room atmosphere conditioning unit.

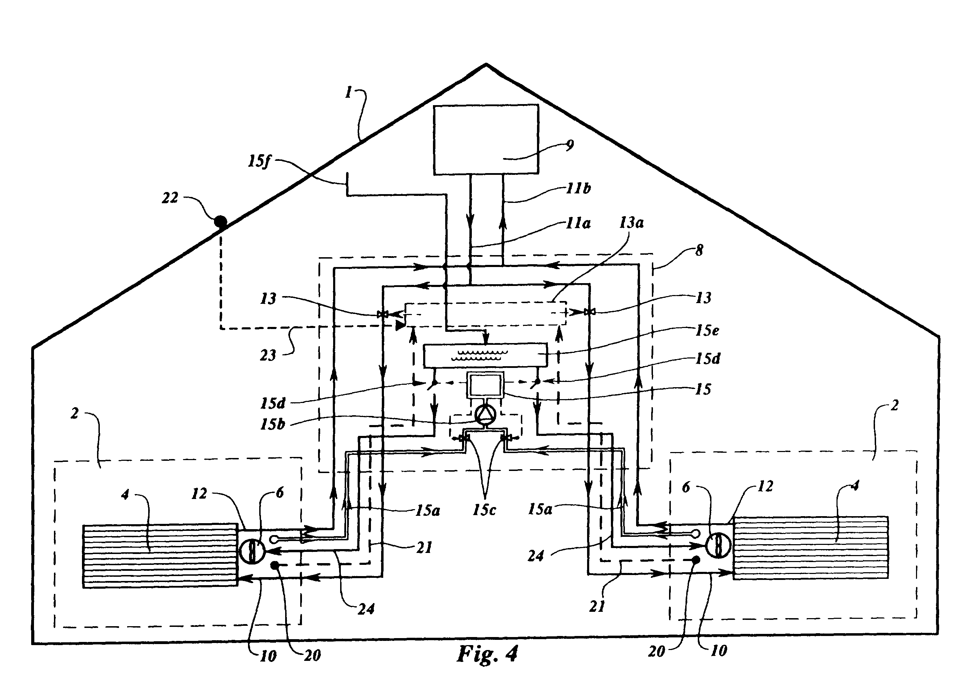

Fig. 4 schematically shows a building 1, e.g. a house, comprising two separate rooms 2 which are indicated by dashed lines. Each room 2 contains a radiator 4 for heating or cooling the room 2, which radiators 4 are coupled to respective ventilating units 6 for periodically refreshing the air in the respective room 2. Each radiator 4 is connected to a central control unit 8 located centrally in the building 1, by means of a feed pipe 10 for feeding a heating or a cooling fluid from a central heating/cooling device 9 through control unit 8 to the radiator 4, and a return pipe 12 for feeding back the heating or cooling fluid from the radiator 4 to the central heating/cooling device 9. The heating or cooling fluid is supplied to the control unit 8 by the central heating/cooling device 9 through feed and return pipes 11a, 11b. Each ventilating unit 6 is connected to the atmosphere outside the building by an inlet duct for feeding in outside air to the ventilating unit 6 and to the room 2, and an outlet duct for feeding air from the room 2 out of the building 1, and may be constructed as shown in Figs. 1-3, comprising an air/air heat exchanger 100.

Furthermore, each room 2 comprises a temperature sensor 20, whereas an additional temperature sensor 22 is located outside the building. The temperature sensors 20 and 22 are connected to the central control unit 8 by leads 21 and 23, respectively. Each ventilating unit 6 is powered and controlled from the central control unit 8 via electrical leads 24.

The heating and ventilating system of Fig. 1 operates as follows. The flow of heating or cooling fluid through the feed and return pipes 10, 12 is controlled by valves 13, which are operated by an electronic device 13a inside the central control unit 8, amongst others on the basis of information from the temperature sensors 20 and 22 and on the basis of the temperature desired by the user of the room(s). For each separate room 2 the temperature is measured with the temperature sensor 20 and compared with the outside temperature measured by the sensor 22 in the central control unit 8. If a heating or cooling demand is established in one of the rooms 2, the central heating/cooling device 9 will be operated to generate heat or cold which is transported through central control unit 8, feed pipe 10 and return pipe 12 to the radiator 4. This process will continue until the temperature sensor 20 establishes that the desired temperature in the room 2 has been reached. The operation of the ventilating unit 6 is controlled by the central control unit 8, possibly taking into account the temperature measured by the sensors 20 and 22.

For this purpose the central control unit 8 comprises a central gas analysis unit 15, which analyses the air quality in the separate rooms by way of taking samples. These samples are supplied through air ducts 15a between the rooms 2 and the central control unit 8 by means of a vacuum pump 15b. A specific air duct 15a can be connected to the central gas analysis unit 15 by operating a valve 15c. If the central gas analysis unit 15 establishes a poor air quality in a room 2, a switch 15d is closed for providing DC power from a transformer/rectifier unit 15e to the corresponding ventilating unit 6 by the electrical lead 24. The transformer/rectifier unit 15e is connected to a mains power supply 15f and contains a high efficiency central transformer.

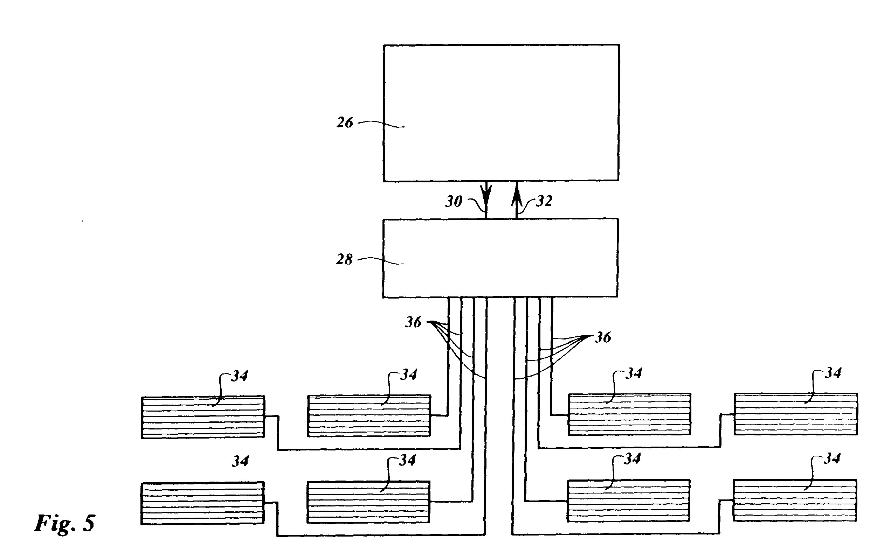

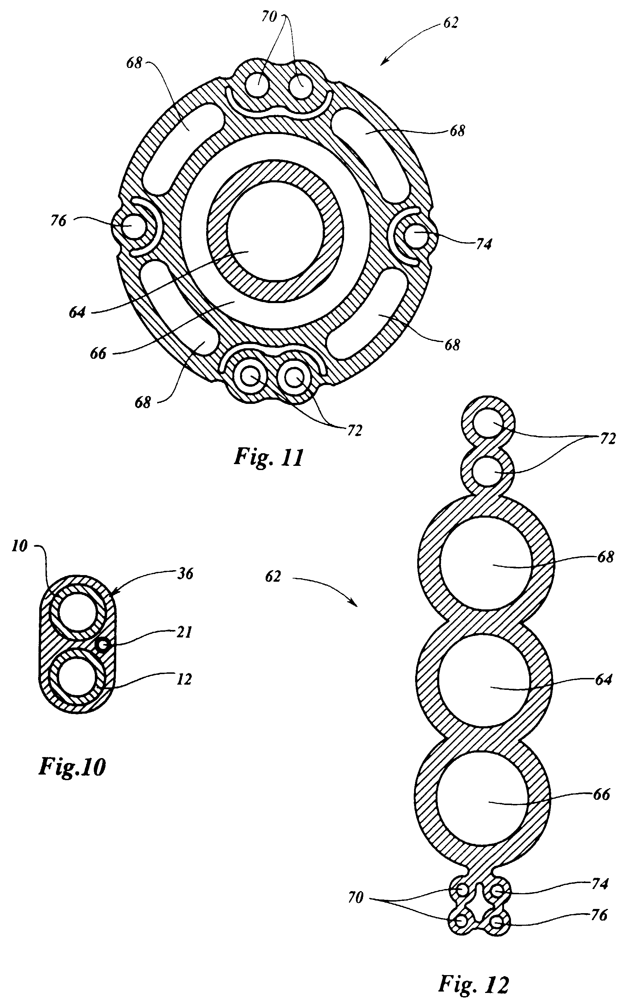

The system according to Fig. 5 comprises a gas-fired central heating device 26, a central control unit 28 connected to the central heating device 26 by a feed pipe 30 and a return pipe 32 for a heating fluid, and eight radiators 34 connected to the central control unit 28 by feed and return pipes symbolically shown by single lines 36. Each radiator 34 is located in a separate room of a building, as has been explained in connection with Fig. 4, while each room contains a sensor (not shown) connected to the central control unit 28. When the sensor detects a room temperature below a predetermined value, a corresponding data signal is sent to the central control unit, which starts the central heating device 26 and provides a connection in the central control unit 28 between the central heating device 26 and the feed and return pipes 36 of the radiator 34 in the room. It will be clear that each radiator 34 in this way can be controlled individually by the central control unit 28, so that each room temperature can be regulated individually. For ease of installation it is preferred to use an integrated pipe for the feed and return pipes 36 according to Fig. 10. With the integrated pipe 36 of Fig. 10 all radiators 34 of Fig. 5 can be very easily installed and connected to the central control unit 28. Preferably, the integrated pipe 36 also contains the lead 21 for interconnecting the temperature sensor in each room and the central control unit 28. It will be clear that the control unit 28 contains a suitable number of control valves for connecting one or more radiators 34 to the central heating device 26. The system may comprise ventilating units as described in connection with Fig. 4.

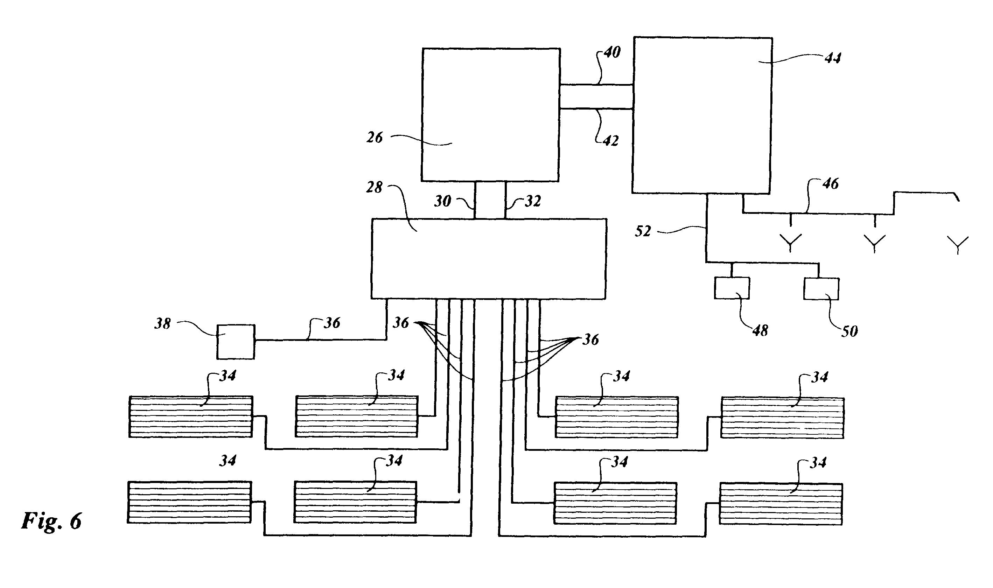

The system according to Fig. 6 incorporates the system of Fig. 5, but has a few additional features to make it more versatile. In Fig. 6, heating fluid from the central heating device 26 can be directed by the central control unit 28 to an indirectly heated washing machine or laundry dryer 38, which basically is connected to the central control unit 28 with an integrated pipe of the type shown in Fig. 10. In this case, the lead 21 in the integrated pipe 36 signals a heat demand from the laundry dryer 38 to the central control unit 28, making the central control unit 28 supplying fluid heated in the central heating device 26 to the laundry dryer 38.

According to Fig. 6, the central heating device 26 is further connected by a feed pipe 40 and a return pipe 42 to an indirectly heated hot water boiler 44 for supplying hot domestic water through a pipe 46 and hot water for a hot-fill washing machine 48 and a dish-washer 50 through a pipe 52.

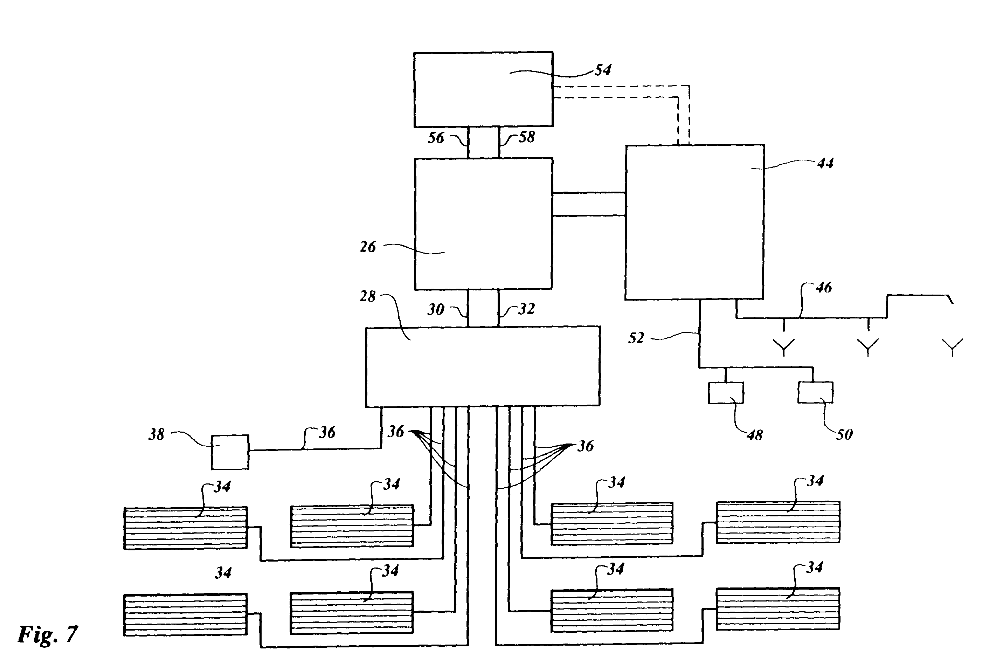

The system shown in Fig. 7 incorporates the system of Fig. 3, and additionally has one or more high performance solar panels 54 connected to it by a feed pipe 56 and a return pipe 58 leading to the central heating device 26. The heat needed in the system of Fig. 7 is basically generated by the solar panel(s) 54 and supplemented by the central heating device 26 in case the heat demand exceeds the heat generated by the solar panel(s) 54.

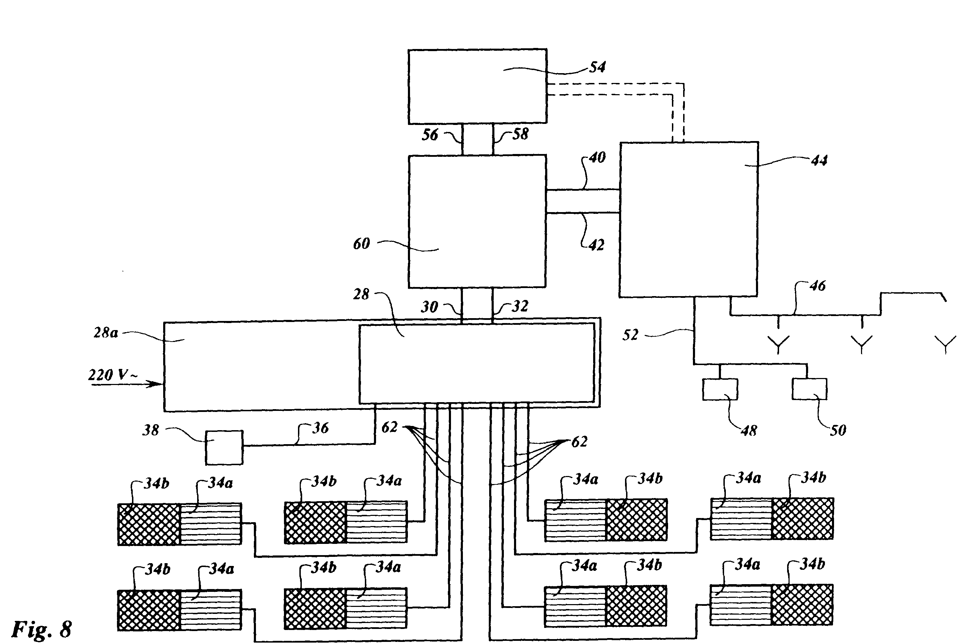

The system according to Fig. 8 differs from the system shown in Fig. 7 in that it contains a gas-fired absorption chiller/heater 60, making it possible not only to supply convectors 34a with a heating fluid to the control unit 28, but also supplying the convectors 34a with a cooling fluid for lowering the temperature in a room. The convector 34a in each room is combined with a ventilating unit 34b for ventilating the room and heat recovery. The combined convector/ventilating units 34a, 34b are connected to the central control unit by integrated pipes of the type as shown in Figs. 11 and 12.

The integrated pipe 62 shown in Fig. 11, which pipe may have an outer diameter of approximately 28 mm, has a feed duct 64 for feeding a heating fluid or a cooling fluid to the convector 34a, a return duct 66 for the heating or cooling fluid, four air ducts 68 for drawing air from the room and supplying it to a gas analysis unit in the central control unit 28, two electrical leads 70 for controlling actuators in the convector/ventilating unit 34a, 34b, 24 V DC power supply leads 72 for the fan(s) in the ventilating unit 34b, a room temperature sensor cable 74, and a spare sensor cable 76. Fig. 12 shows a different arrangement of the same type of ducts and leads as in the integrated pipe of Fig. 11, but in another spatial orientation, which makes the integrated pipe of Fig. 12 more flexible in one direction.

Returning now to Fig. 8, it will be clear that the central control unit 28 in the system shown is extended with a part 28a containing a central gas analysis unit and a central DC power supply.

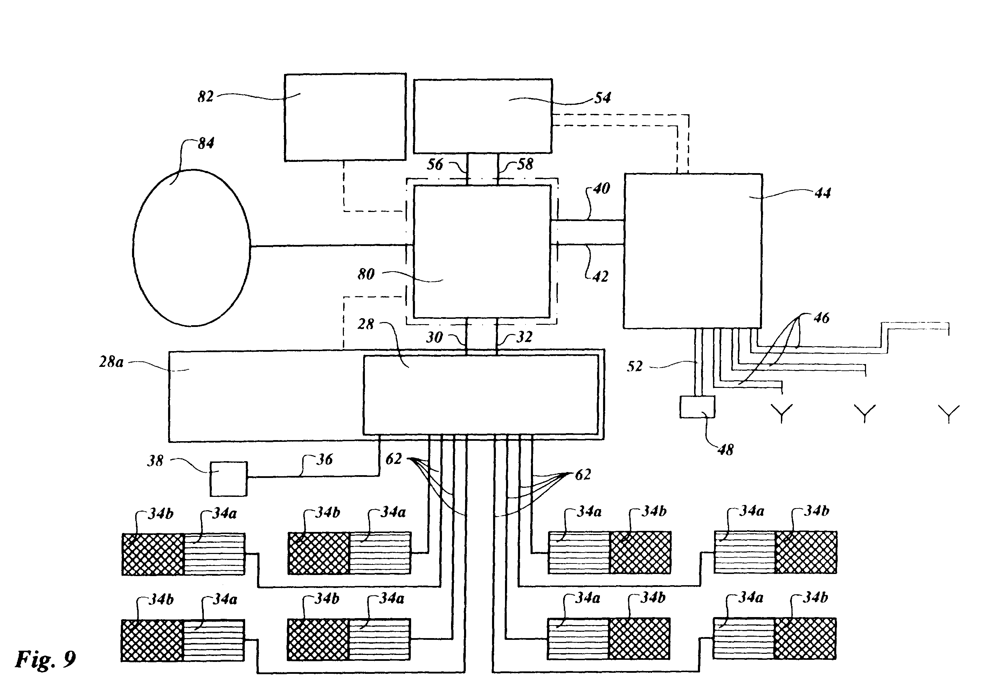

The system of Fig. 9 differs from the system of Fig. 8 in that it contains a cogeneration gas-fired chiller/heater/power supply and an additional photovoltaic solar panel 82 for generating the energy needed. Further, it is possible to couple the system to a district heating system 84, allowing for an abandonment of a gas supply to the system.

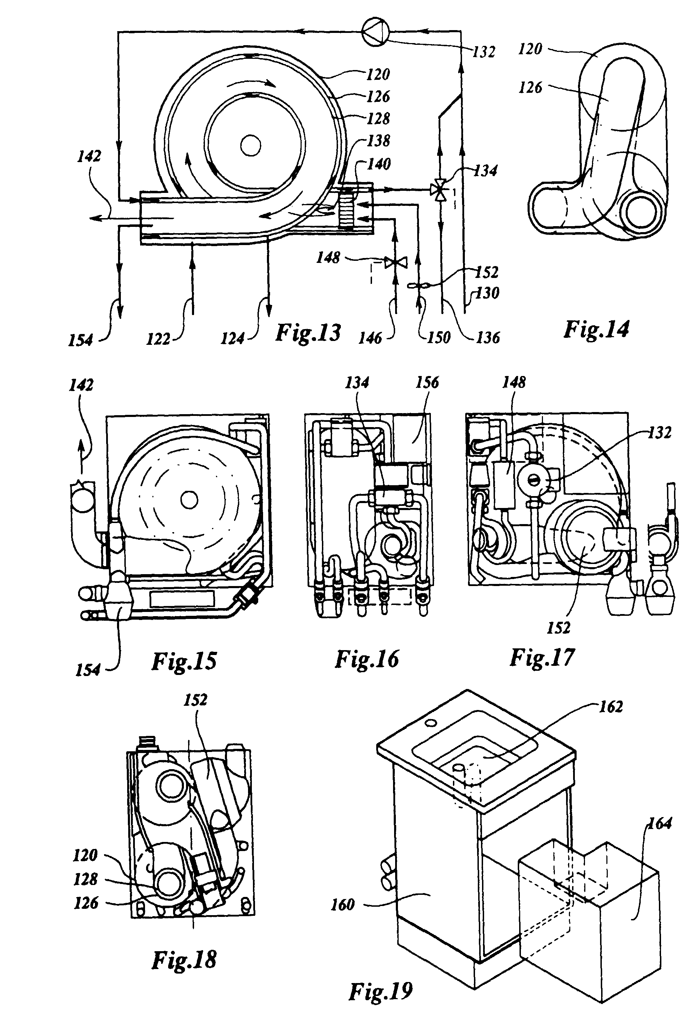

The central heating device shown in Figs. 13 and 14 consists of a torus-shaped hot water boiler 120 with a cold water inlet 122 and a warm water outlet 124. The torus-shape allows for maximum contained volume and high mechanical strength within a restricted rectangular space. Inside the torus a helically shaped tube 126 is placed to heat the water. This tube - as seen in the longitudinal direction thereof and in cross-section - can be shaped in various ways so as to achieve an optimum heat transfer. The helically shaped tube 126 contains a second, smaller helically shaped tube 128, which is usually placed concentrically. Also this second tube 128 - as seen in the longitudinal direction thereof and in cross section - can be shaped in various ways in order to achieve an optimum heat transfer.

The space between the outer wall of the second tube 128 and the inner wall of the first tube 126 is filled with a heat transfer fluid. This fluid flows from a room heating system 130 and is pumped by a pump 132 into the space between the first and the second helically shaped tubes 126, 128 where it is heated. When the heated fluid leaves the helically shaped tubes it passes a three-way valve 134 where it is either sent back to the room heating system through a line 136 in the case of a room heating demand, or it goes into a loop where it is pumped back again to the other end of the helically shaped tube, in the case of a hot water heating demand.

The inside of the second helically shaped tube 128 acts both as a combustion chamber 138 for a burner 140 and as an exhaust pipe for the flue gases 142. Depending on the type of burner, one end of the smallest helically shaped tube 128 can be used to contain a pre-mix area 144, where fuel 146 - regulated through a valve 148 - can be mixed with outside air 150 propelled by a fan 152.

Depending on the temperature and humidity of the combustion gases 142, provisions can be made at the corresponding end of the smallest helically shaped tube 128 to extract condensate water 154.

Figs. 15-18 show a central heating device of Figs. 13 and 14 in a practical layout using standard components, proving the feasibility of compact design. The heating device according to Figs. 15-18 does not contain a central control unit as discussed above, but does contain an electronic device 156 for the control of the heating device itself.

Fig. 19 shows a kitchen cupboard 160 under a sink 162, in which cupboard a heating device according to Figs. 15-18 depicted as a block 164 can be placed. Due to its geometry and configuration of components, the central heating device can supply sufficient power for normal room heating and hot water requirements in the household and at the same time it is small enough to be placed near the hot water tap which is most frequently used, thus reducing energy losses.

## Claims

1. Line for a room atmosphere conditioning system, characterized in that the line comprises at least two fluid ducts integrated in the line.

2. Line according to claim 1, further comprising at least one lead integrated in the line.

3. Line according to claim 1 or 2, characterized in that at least one of the fluid ducts is an air duct for sampling air from a room.

4. Line according to any of claims 1-3, characterized in that the fluid ducts comprise a feed duct for feeding a heating fluid or a cooling fluid, and a return duct for the heating fluid or the cooling fluid.

5. Line according to any of claims 2-4, characterized in that the at least one lead is a room temperature sensor cable.

6. Line according to any of claims 2-5, comprising at least two electrical leads.

7. Line according to claim 6, characterized in that the electrical leads are power supply leads.

8. Line according to any of claims 1-7, characterized in that fluid ducts are arranged coaxially.

9. Line according to claim 4 and 8, characterized in that the return duct is arranged around the feed duct.

10. Line according to claim 3 and 9, characterized in that the air duct is arranged around the return duct.

11. Line according to any of claims 1-7, characterized in that the fluid ducts are arranged next to each other.

12. Line according to any of claims 2-11, characterized in that the leads are arranged on the outer periphery of the line.

13. Line according to any of claims 2-12, characterized in that the leads are connected to the fluid ducts by at least one narrow connection along the length of the line.
